(19) Europäisches Patentamt
European Patent Office
Office européen des brevets

(11) Numéro de publication: **0 319 383**
**A2**

(12) **DEMANDE DE BREVET EUROPEEN**

(21) Numéro de dépôt: **88402984.4**

(22) Date de dépôt: **28.11.88**

(51) Int. Cl.⁴: **C 07 F 7/08**

(30) Priorité: **03.12.87 US 128248**

(43) Date de publication de la demande:
**07.06.89 Bulletin 89/23**

(84) Etats contractants désignés:
**AT BE CH DE FR GB IT LI NL SE**

(71) Demandeur: **RHONE-POULENC CHIMIE**
**25, quai Paul Doumer**
**F-92408 Courbevoie Cédex (FR)**

(72) Inventeur: **Gradeff, Peter S.**
**Black River Road**
**Pottersville N.J. 07979 (US)**

**Yunlu, Kenan**
**50 Robinson Street**
**New Brunswick N.J. 08901 (US)**

(74) Mandataire: **Dutruc-Rosset, Marie-Claude et al**
**RHONE-POULENC INTERSERVICES Service Brevets Chimie 25, Quai Paul Doumer**
**F-92408 Courbevoie Cédex (FR)**

(54) **Procédé pour la fabrication d'hydrocarbylsilyloxydes cériques par transéthérification d'alcoxydes cériques.**

(57) L'invention concerne la fabrication des hydrocarbylsilyloxydes de cérium.

Selon l'invention, on transéthérifie un alcoolate cérique par un hydrocarbylsilanol ayant de 1 à 3 groupes hydroxyles en conditions anhydres à une température dans la gamme d'environ -30 à environ 200°C, en déplaçant ainsi au moins un groupe hydrocarbyloxy de l'alcoolate cérique sous forme de l'alcool correspondant, par un groupe silyloxyde et formant ainsi l'hydrocarbylsilyloxyde cérique.

Applications : fabrication de poudres d'oxydes contenant Ce et Si, de fibres optiques, d'additifs divers, de catalyseurs dans la vulcanisation du caoutchouc de silicone et dans la fabrication de produits de polyuréthannes.

EP 0 319 383 A2

## Description

### Procédé pour la fabrication d'hydrocarbylsilyloxydes cériques par transéthérification d'alcoxydes cériques.

L'invention concerne la fabrication des hydrocarbylsilyloxydes cériques.

Les alcoxydes ou alcoolates de métaux polyvalents constituent une classe importante de composés organométalliques à usages multiples dans de nombreuses utilisations industrielles. Dans certains cas, leurs utilisations vont en parallèle avec les carboxylates métalliques et d'autres composés organométalliques, mais ils ont des avantages sur ces composés à cause de leurs propriétés catalytiques, de leur facilité d'hydrolyse, de leur solubilité dans les solvants organiques et de leur volatilité. On les a utilisés comme additifs aux peintures, hydrofugeants, activeurs d'adhérence, mordants, agents d'apprêt dans les compositions d'émaux, catalyseurs et également comme intermédiaires très importants dans la synthèse d'autres composés organiques.

Il existe quatre méthodes générales de préparation des alcoolates métalliques, toutes en conditions anhydres, qui sont les suivantes :

A- Par réaction de l'alcanol correspondant et d'un métal tel que les métaux alcalins, les métaux alcalino-terreux et l'aluminium, avec l'aide d'un catalyseur alcalin ou un acide.

B- Par réaction de l'alcool correspondant avec les oxydes et hydroxydes des métaux, par exemple NaOH ou $Na_2O$, $V_2O_5$ et $MoO_3,8H_2O$.

C- Par réaction de l'alcool correspondant et de l'halogénure métallique en présence d'une base anhydre. Un exemple typique est la préparation de $Th(OR)_4$ ou $Zr(OR)_4$ :

$ThCl_4 + 4ROH + 4NaOR \rightarrow Th(OR)_4 + 4NaCl$

$ZrCl_4 + 4ROH + 4NH_3 \rightarrow Zr(OR)_4 + 4NH_4Cl$

La réaction peut être utilisée pour préparer des alcoolates de titane, hafnium, germanium, niobium, tantale, aluminium et étain.

D- Par transéthérification des alcoolates métalliques d'alcools inférieurs comme les méthylates, éthylates ou isopropylates avec un alcool supérieur.

La méthode A est illustrée pour un certain nombre d'alcoolates d'yttrium, de lanthane et d'autres lanthanides par L. Brown et K. Mazdiyasni dans Inorganic Chemistry (1970) p. 2783. La réaction, que l'on croyait antérieurement n'être utile que pour les métaux alcalins, le magnésium et l'aluminium, a été étendue par eux à la synthèse des isopropylates d'yttrium et de tous les lanthanides.

Pour les lanthanides inférieurs tels que lanthane, cérium, praséodyme et néodyme, on utilise comme catalyseur un mélange de $HgCl_2$ et $Hg(C_2H_3O_2)_2$ ou $HgI_2$ pour augmenter à la fois la vitesse de réaction et le rendement. En général, on fait réagir 5 g de tournures de métal avec environ 300 ml d'alcool isopropylique à la température de reflux pendant environ 24 h et en présence d'une faible quantité du sel de Hg catalyseur. Les auteurs disent que les rendements sont de 75% ou mieux.

La plupart des autres exemples de préparation d'alcoolates de lanthanides dans la littérature concernent l'utilisation des halogénures métalliques correspondants. Dans certains cas, on préfère un complexe $LaCl_3.3ROH$ au chlorure $LaCl_3$ (Mistra et autres Austr. J. Chem. 21 p. 797 (1978) et Mehrotra et Batwara, Inorganic Chem. 9 p. 2505 (1970).

Une variante intéressante de la Méthode D est mentionnée par Tripathi, Batwara et Mehrotra, J.C.S.A. 1967 p. 991. Les alcoolates inférieurs d'ytterbium (tels que méthylate et éthylate) ont été synthétisés à partir de l'isopropylate d'ytterbium, par transéthérification par le méthanol ou l'éthanol. En raison de leur faible solubilité, ces alcoolates sont séparés par précipitation au cours de la réaction, déplaçant l'équilibre de réaction jusqu'à la transéthérification complète.

En général, les méthodes A, B et C ne conviennent que pour la préparation des alcoolates inférieurs, tels que méthylates, éthylates et isopropylates, puisque la réactivité des alcools supérieurs diminue lorsque leurs poids moléculaires augmentent. Les alcoolates supérieurs sont mieux préparés par la méthode D qui est un procédé en deux étapes.

Le seul procédé publié pour préparer les alcoolates cériques appliquait la Méthode C au chlorure cérique, Bradley et autres, J.C.S. 1956 p. 2260-2264. Comme le tétrachlorure de cérium est instable, Bradley et autres avaient choisi comme produit de départ le complexe hexachlorure de dipyridinium-cérium (ou hexachlorocétate IV de dipyridinium).

Le dioxyde de cérium était d'abord transformé en sulfate cérique (ou sulfatocérate) d'ammonium. L'hydroxyde cérique pur était précipité à partir d'une solution aqueuse de sulfate cérique d'ammonium et lavé à fond. L'hydroxyde cérique fraîchement préparé, en suspension dans l'alcool absolu, était traité par le chlorure d'hydrogène anhydre et ensuite on ajoutait de la pyridine, qui formait le complexe hexachlorure de dipyridinium-cérium insoluble $(Py)_2CeCl_6$. Le complexe était filtré, séché et utilisé pour préparer directement le méthylate, l'éthylate et l'isopropylate, tandis que les alcoolates correspondant aux groupes propyle, butyle, sec-butyle, néopentyle et n-pentyle étaient préparés par échange d'alcools, c'est-à-dire transéthérification, à partir de l'isopropylate. Le méthylate et l'éthylate étaient également préparés par échange à partir de l'isopropylate.

Gradeff et Schreiber, dans le brevet des E.U.A. n° 4 489 000 délivré le 18 décembre 1984, proposent un procédé pour préparer les alcoolates cériques qui consiste à faire réagir le nitrate cérique d'ammonium, ou

hexanitratocérate (IV) d'ammonium, avec un alcool en conditions anhydres en présence d'une base anhydre à une température dans la gamme d'environ -30 à environ 200°C, de préférence d'environ 0 à 150°C, jusqu'à ce que l'alcoolate cérique et le nitrate de la base soient formés.

Ce procédé évite la nécessité décrite par Bradley et autres de préparer d'abord l'hydroxyde cérique à partir du sel cérique, dans ce cas le sulfate cérique d'ammonium, et de transformer ensuite l'hydroxyde en chlorure, qu'il faut stabiliser sous forme de complexe de pyridine.

Il est assez surprenant, malgré l'importance considérable des travaux effectués sur la préparation de composés siliciés de métaux des terres rares, que les hydrocarbylsilyloxydes de cérium soient inconnus, ainsi qu'un procédé convenable pour les préparer.

Bradley et Thomas ont indiqué dans J. Chem. Soc. 1959 p. 3404 un travail sur les dérivés alkylsilyloxydes de titane, de zirconium, de niobium et de tantale, utilisant la triméthylsilanolyse d'isopropylates de titane ou de zirconium, ou utilisant l'acétate de trialkylsilyle à la place du silanol, mais il n'est pas fait référence au cérium.

Bradley et Prevedorou-Demas ont rapporté, dans J. Chem. Soc. 1964, p. 1580, un autre travail sur les polymères de triméthylsilyloxydes-oxydes de zirconium.

Aucun de ces articles ne fait référence à des silyloxydes de cérium.

Selon la présente invention, on propose un procédé pour préparer des hydrocarbylsilyloxydes cériques qui consiste à transéthérifier un alcoolate cérique par le silanol ayant le groupe hydrocarboné désiré et le nombre désiré de groupes hydroxyles en conditions anhydres à une température dans la gamme d'environ -30 à environ 200°C, en déplaçant ainsi au moins un groupe hydrocarbyloxy de l'alcoolate cérique sous forme de l'alcool correspondant par un groupe silyloxyde et formant ainsi l'hydrocarbylsilyloxyde cérique du silanol. Les hydrocarbylsilyloxydes cériques peuvent être isolés purs ou à l'état de complexes avec le solvant dans certains cas, on peut utiliser le silyloxyde sans le séparer du mélange de réaction.

On croit que les alcoxydes de cérium existent sous la forme de l'alcoxyde et sous forme de complexes en association avec l'alcool libre et, comme ceux-ci semblent instables, de leurs produits de décomposition. Tous ces composés sont compris dans ce que l'on appelle couramment "alcoxydes de cérium" et ce terme est donc utilisé ici dans ce sens couramment admis.

On pense que le produit, un hydrocarbylsilyloxyde cérique, est nouveau puisqu'il n'a pas été indiqué précédemment dans la littérature et il est caractérisé par un ou plusieurs groupes ayant un atome de cérium tétravalent relié par l'oxygène à 1, 2, 3 ou 4 atomes de silicium, comme indiqué, les 3 ou 2 valences restantes du silicium, respectivement, étant reliées à des groupes hydrocarbonés ayant de 1 à 20 atomes de carbone. Les composés peuvent avoir 1, 2, 3 ou 4 atomes de silicium, dans une seule unité, ou dans plusieurs de ces unités, reliées en oligomères ou polymères linéaires, ramifiés ou du type cage, lorsque le silanol de départ est un diol.

En conséquence, les hydrocarbylsilyloxydes cériques peuvent être définis par la formule générale suivante :

I

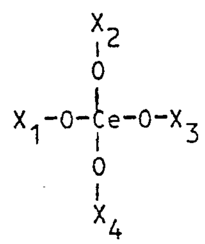

dans laquelle $OX_1$, $OX_2$, $OX_3$ et $OX_4$ identiques ou différents sont choisis parmi

a) $-O-NO_2$,

b) $-O-R_1$ où $R_1$ est un groupe hydrocarboné ayant de 1 à environ 20 atomes de carbone,

c) $-\left(O\right)_{4-y}$ Si-$R_y$ où R est H ou un radical hydrocarboné ayant de 1 à environ 20 atomes de carbone, avec la limitation qu'au plus 1 atome d'hydrogène est lié au silicium et y est un nombre entier égal à 1, 2 ou 3.

Lorsque y est supérieur à 1, les radicaux R peuvent être identiques ou différents.

Lorsque y est égal à 1 ou 2, l'atome de silicium peut être relié par l'intermédiaire de 1 ou 2 atomes d'oxygène à un même atome de cérium ou à 2 atomes de cérium différents ; de même, l'un desdits atomes d'oxygène au moins peut être lié à un autre atome de silicium qui appartient à un autre radical de type c) porté par le même atome de cérium ou par un autre atome de cérium.

d)

d) 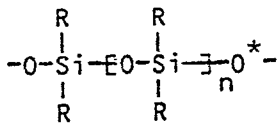

où R est un radical hydrocarboné comportant de 1 à environ 20 atomes de carbone, n est le nombre de motifs dans le polymère et est compris entre 1 et environ 1 000 et l'oxygène -O*- est lié à un atome d'hydrogène ou est lié à un atome de cérium, avec la condition complémentaire qu'au moins un des groupes $OX_1$, $OX_2$, $OX_3$ et $OX_4$ appartient à l'une des catégories c) et d).

Des exemples de composés représentés par la formule I, selon la valeur de $X_1$, $X_2$, $X_3$ et $X_4$, comprennent les composés suivants :

1- 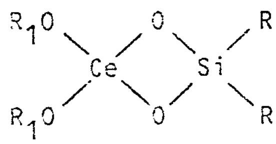

2- 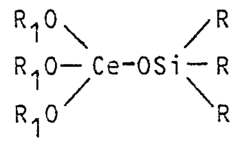

3- 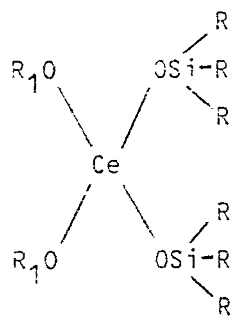

4- 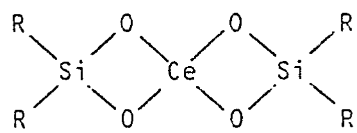

5- 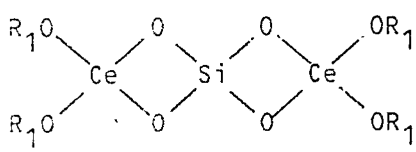

6- 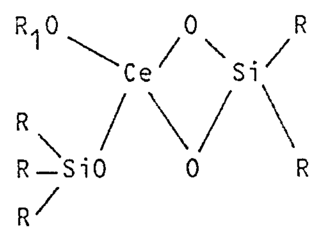

7- 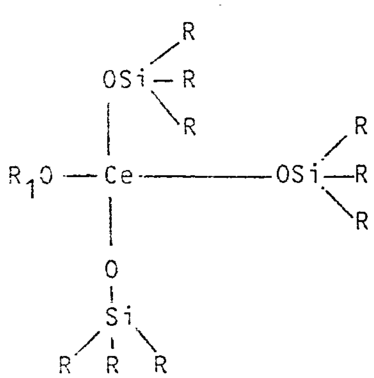

8- 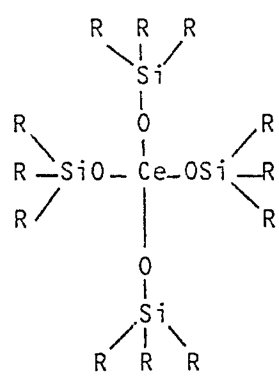

9- 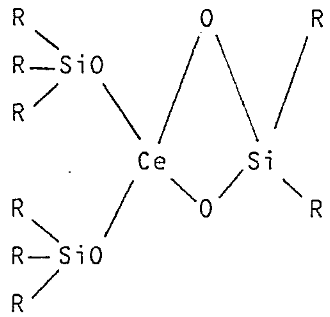

10- 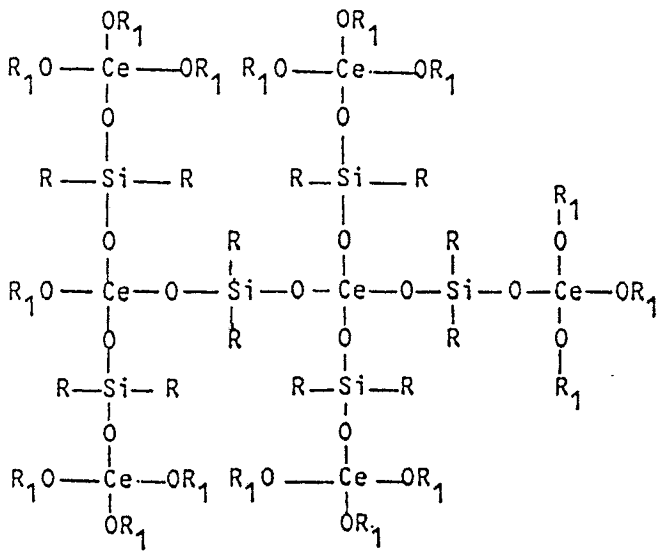

11- 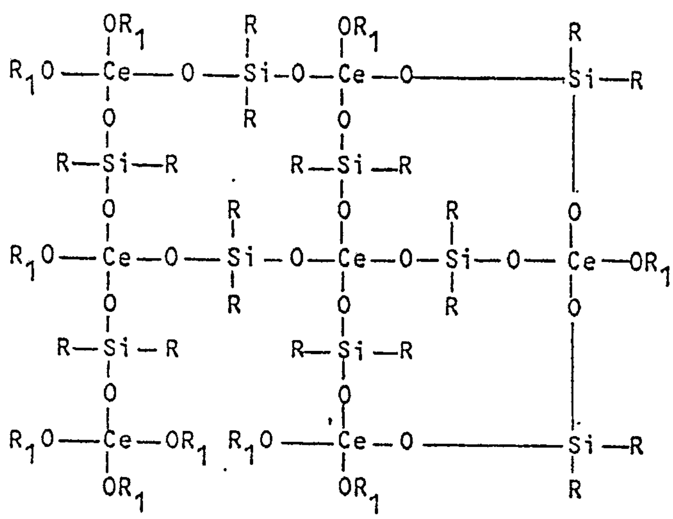

12-

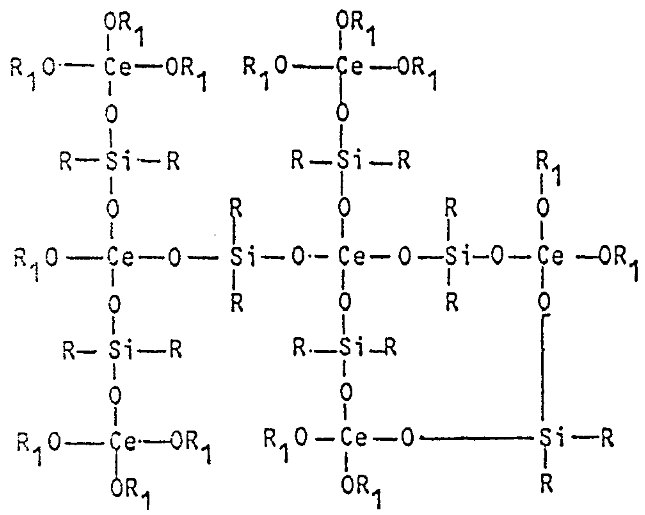

13-

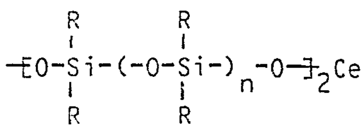

Le composé (13) peut être considéré comme un motif d'une structure polymérique dans laquelle n peut varier entre 0 et 1 000.

Dans les formules ci-dessus, R est un groupe hydrocarboné ayant de 1 à environ 10 atomes de carbone, et les restes R liés à un atome de silicium quelconque peuvent être identiques ou différents.

$R_1$ est un groupe hydrocarboné relié au cérium par l'oxygène et ayant de 1 à environ 10 atomes de carbone, et les restes $R_1$ liés à un atome de cérium quelconque peuvent être identiques ou différents.

Des exemples de groupes hydrocarbonés R et $R_1$ intervenant dans l'hydrocarbylsilyloxyde cérique de formule (I) comprennent les groupes alkyle, alcényle en chaînes droites ou ramifiées, cycloalkyle, cycloalcényle, phényle et alkyphényle, naphtyle et alkylnaphtyle.

Des groupes hydrocarbonés R et $R_1$ ayant de 1 à environ 10 atomes de carbone sont préférés.

Des exemples de restes alkyles R et $R_1$ comprennent les groupes méthyle, éthyle, propyle, isopropyle, butyle, sec-butyle, hexyle, octyle , isooctyle, éthyl-2-hexyle, nonyle et décyle.

Des exemples de restes alcényles R et $R_1$ comprennent les groupes vinyle, allyle, butényle, hexényle, octényle, nonényle et décényle.

Des exemples de cycloalkyles et cycloalcényles R et $R_1$ sont les groupes cyclopentyle, cyclohexyle, cycloheptyle et cyclooctyle, cyclopentényle, cyclohexényle et cycloheptényle.

Des exemples de restes alkylaryles R et $R_1$ sont les restes phényle, phénylméthyle et phényléthyle.

Dans la liste des groupes précités R et $R_1$, ceux qui sont préférés, sont choisis parmi les groupes alkyles linéaires ou ramifiés ayant de 1 à 5 atomes de carbone, le groupe vinyle, le groupe cyclohexyle et le groupe phényle.

Conformément à la présente invention, on obtient un hydrocarbylsilyloxyde cérique en faisant la transéthérification d'un alcoolate cérique, avec un hydrocarbylsilanol.

On peut faire appel à un alcoolate cérique dérivant d'un alcool inférieur ou supérieur. C'est ainsi que l'on peut se reporter à EP-A-0 134 161 et EP-A-0 183 603 qui décrivent des procédés d'obtention d'alcoolates cériques.

Le procédé de l'invention peut être mis en oeuvre à partir d'un alcoolate cérique dérivant d'un alcool aliphatique ayant de 1 à environ 20 atomes de carbone ou cycloaliphatique ayant de 3 à environ 20 atomes de carbone.

Toutefois, on préfère utiliser, à titre de matière première, un alcoolate cérique dérivant d'un alcool aliphatique ayant de 1 à 5 atomes de carbone pour des raisons économiques et du fait de la facilité d'élimination de l'alcool aliphatique inférieur.

Pour ce qui est de l'hydrocarbylsilanol mis en oeuvre, il peut appartenir à l'une quelconque des classes de formules suivantes :

a) 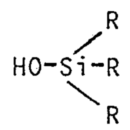 (II)

b) 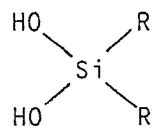 (III)

c) 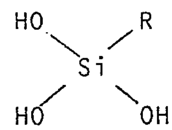 (IV)

d) 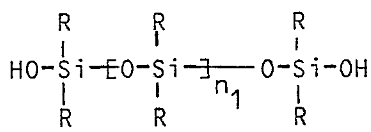 (V)

Dans les formules données ci-dessus, R a la signification donnée précédemment et $n_1$ est le nombre de motifs du polymère et peut varier donc de 0 à environ 1 000.

Le groupe d) comprend des résines silicones solides contenant des groupes OH libres , qui peuvent être solubilisées et utilisées dans la réaction avec le nitrate cérique d'ammonium pour former une résine silicone liée au cérium par l'oxygène.

R est l'hydrogène ou le groupe hydrocarboné désiré dans le produit silyloxyde et les restes R fixés à n'importe quel atome de silicium peuvent être identiques ou différents.

Des sous-classes préférées de silanols comprennent :

(i) 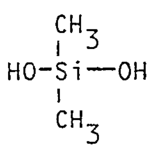 (ii) 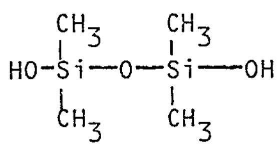 (iii) 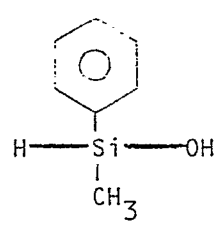

(iv) 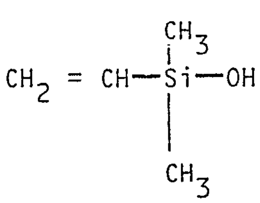 (v) $HO-Si(R_2)_3$ $R_2$ = méthyle, éthyle, phényle

(vi) 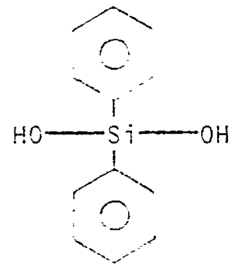 (vii) 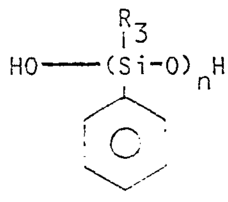 n = 4, $R_3$ = groupe hydrocarboné en $C_1$-$C_6$

(viii) 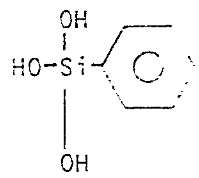 (ix) 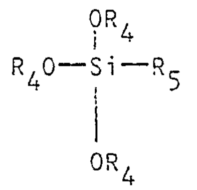 $R_4$ = méthyle, éthyle, propyle, butyle, isopropyle.

$R_5$ = méthyle, éthyle, vinyle, phényle.

Le procédé se déroule facilement avec les silanols, les silanediols et les silanetriols aliphatiques ayant 1, 2 ou 3 groupes hydrocarbonés en $C_1$-$C_5$, par exemple triméthylsilanol, triéthylsilanol, tripropylsilanol, triisopropylsilanol, tributylsilanol, triisobutylsilanol, tri-(sec-butyl)silanol, tri-(tertbutyl)silanol, tripentylsilanol, triisopentylsilanol, tri-(secpentyl)silanol, tri-(tert-pentyl)silanol ; diméthylsilanediol, diéthylsilanediol, dipropylsilanediol, diisopropylsilanediol, dibutylsilanediol, diisobutylsilanediol, di-(sec-butyl)silanediol, di-(tert-butyl)silanediol, dipentylsilanediol, diisopentylsilanediol, di-(sec-pentyl)silanediol, di-(tert-pentyl)silanediol ; méthylsilanetriol, éthylsilanetriol, propylsilanetriol, isopropylsilanetriol, butylsilanetriol, isobutylsilanetriol, sec-butylsilanetriol, tert-butyl-silanetriol, pentylsilanetriol, isopentylsilanetriol, sec-pentyl-silanetriol, tert-pentylsilanetriol.

On peut incorporer directement dans le mélange de réaction un hydrocarbylsilanol aliphatique supérieur, cycloaliphatique ou aromatique, contenant des groupes hydrocarbonés ayant au moins 6 jusqu'à environ 20 atomes de carbone en mélange avec un silanol aliphatique inférieur contenant des groupes hydrocarbonés en $C_1$-$C_5$ pour former un silyloxyde cérique du silanol supérieur. On citera à titre d'exemples les suivants : trihexylsilanol, triheptylsilanol, triisoheptylsilanol, trioctylsilanol, triisooctylsilanol, tri-(éthyl-2-hexyl)-silanol, tri-(sec-octyl)-silanol, tri-(tertoctyl)-silanol, trinonylsilanol, triisononylsilanol, tridécylsilanol, tridodécylsilanol, tritétradécylsilanol, trioctadécylsilanol, trihexadécylsilanol, trioléylsilanol et trieicosylsilanol ; dihexylsilanediol, diheptylsilanediol, diisoheptylsilanediol, dioctylsilanediol, diisooctylsilanediol, di-(éthyl-2-hexyl)-silanediol, di-(sec-octyl)-silanediol, di-(tert-octyl)-silanediol, dinonylsilanediol, diisononylsilanediol, di-décylsilanediol ; hexylsilanetriol, heptylsilanetriol, isoheptylsilanetriol, octylsilanetriol, isooctylsilanetriol, 2-éthylhexyl-silanetriol. sec-octylsilanetriol, tert-octylsilanetriol, nonylsilanetriol, isononylsilanetriol, décylsilanetriol, ou un silanolcycloaliphatique ayant de 3 à environ 20 atomes de carbone, comme par exemple tricyclopropylsilanol, tricyclobutylsilanol, tricyclopentylsilanol, tricyclohexylsilanol, tricycloheptylsilanol, tricyclooctylsilanol, tricyclododécylsilanol, tripropylcyclohexylsilanol, triméthylcyclohexylsilanol et triméthylcycloheptylsilanol ; dicyclopropylsilanediol, dicyclobutylsilanediol, dicyclopentylsilanediol, dicyclohexylsilanediol, dicycloheptylsilanediol, dicyclooctylsilanediol, dipropylcyclohexylsilanediol, diméthylcyclohexylsilanediol et diméthylcycloheptylsilanediol : cyclopropylsilanetriol, cyclobutylsilanetriol, cyclopentylsilanetriol, cyclohexylsilanetriol, cycloheptylsilanetriol. cyclooctylsilanetriol, propylcyclohexylsilanetriol, méthylcyclohexylsilanetriol et méthylcyclohexylsilanetriol et méthylcycloheptylsilanetriol ; un silanol aromatique ou alkylaromatique ayant de 6 à environ 20 atomes de carbone, comme par exemple triphénylsilanol, tribenzylsilanol, triphénéthylsilanol, triphénylpropylsilanol, triphényloctadécylsilanol et trinaphtyldécylsilanol ; diphénylsilanediol, dibenzylsilanediol, diphénétylsilanediol, diphénylpropylsilanediol ; phénylsilanetriol, benzylsilanetriol, phénéthylsilanetriol, phénylpropylsilanetriol, naphtylsilanetriol (lorsque les triols sont trop instables, on les utilise sous la forme de leurs éthers).

Le produit de réaction final est l'hydrocarbylsilyloxyde cérique du silanol supérieur, mais on pense que le silanol inférieur facilite la réaction en formant d'abord un silyloxyde de cérium, ce silyloxyde étant transformé par transéthérification avec le silanol supérieur en le silyloxyde du silanol supérieur.

Les réactions décrites ci-dessus peuvent être mises en oeuvre en présence d'un excés du silanol, qui peut aussi être un solvant du silyloxyde correspondant. Outre le réactif silanol, des solvants inertes tels que DME ou autres éthers méthyliques de glycols (notamment le diglyme), THF ou alcools, peuvent être nécessaires pour dissoudre le nitrate cérique d'ammonium. Des solvants inertes, par exemple, pentane, benzène, toluène, essences minérales, etc., peuvent aussi être nécessaires pour séparer les produits, des nitrates formés comme sous-produits. Si on le désire, le solvant peut être séparé du produit de réaction par distillation sous

pression atmosphérique ou sous pression réduite, après la fin de la réaction. Il est entendu que 1 ou 2 molécules d'un solvant tel que le DME par exemple, peuvent rester liées au cérium par coordination.

La réaction se déroule en conditions anhydres à une température dans la gamme d'environ -30 à environ 200° C, de préférence d'environ 0 à environ 50° C, mieux encore à la température ambiante, (le plus souvent entre 15° C et 25° C) suivant le système solvant et la base utilisés.

La réaction n'exige pas la présence d'une base anhydre, puisque l'alcoxyde de cérium est lui-même une base, mais on peut ajouter une base si on le désire. Les exemples sont l'ammoniac ou un alcoxyde de métal alcalin ou d'ammonium, un silyloxyde ou un polysiloxanoxyde, dérivé de préférence du silanol correspondant pour éviter la contamination du produit de réaction silyloxyde par un autre silyloxyde.

Des exemples de bases anhydres comprennent les composés suivants : triméthylsilyloxyde de sodium, triéthylsilyloxyde de sodium, triméthylsilyloxyde de potassium, triéthylsilyloxyde de potasssium, triisopropylsilyloxyde de sodium, triisobutylsilyloxyde de sodium, triméthylsilyloxyde de lithium et triéthylsilyloxyde de lithium ; méthylate de sodium, éthylate de sodium, méthylate de potassium, éthylate de potassium, isopropylate de sodium, isobutylate de sodium, méthylate de lithium et éthylate de lithium.

La durée de réaction n'est pas essentielle. La réaction est poursuivie jusqu'à ce que le silyloxyde recherché se soit formé. La réaction est normalement rapide et même à la température ambiante il peut suffire de 10 min à quelques heures, mais il n'est pas nécessaire de mettre en oeuvre la réaction au-delà d'une durée de réaction de 5 h. Ordinairement, la réaction est terminée en 1/2 h à 3 h.

La réaction peut se dérouler assez rapidement à la température ambiante et, si c'est le cas, elle se produira aussi très vraisemblablement à des températures bien au-dessous de la température ambiante, jusqu'à -30° C, mais il n'y a pas de raison de faire des frais supplémentaires pour le refroidissement du mélange de réaction. La limite supérieure de la température de réaction est imposée par la volatilité du mélange de réaction ou de l'un quelconque de ces composants et par leurs températures de décomposition. Il n'y a pas de raison d'utiliser une température supérieure au point d'ébullition du mélange de réaction sous la pression atmosphérique mais, si la température d'ébullition est trop basse, par exemple dans le cas du méthanol, on peut utiliser un réacteur fermé ou un système de réaction sous pression. Compte tenu des facteurs ci-dessus, il n'est pas nécessaire que la température de réaction dépasse 200° C.

La quantité de silanol est au moins la quantité stoechiométrique, nécessaire pour réagir avec l'alcoxyde cérique et déplacer le nombre souhaité de groupes alcoxy, depuis 1 jusqu'à la totalité, selon qu'on le désire. On peut, bien entendu, utiliser des quantités supérieures à la quantité stoechiométrique, par exemple lorsque le silanol doit également agir comme solvant, suivant la dilution du mélange de réaction nécessaire.

L'hydrocarbylsilyloxyde cérique est normalement insoluble dans le mélange de réaction et peut être séparé pendant le traitement par filtration. Si le silyloxyde est soluble dans le mélange de réaction, le solvant présent dans le mélange de réaction peut être séparé par distillation.

Les exemples suivants représentent des modes de mise en oeuvre préférés de l'invention.

Dans tous ces exemples, les manipulations sont effectuées à l'abri de l'oxygène et de l'humidité, soit dans une boîte à gants à recyclage, remplie d'azote (VAC, de la Société Vacuum Atmospheres Company, EUA), soit par la technique habituelle de Schlenk, en utilisant de l'argon comme gaz inerte. Les solvants anhydres (diméthoxyéthane ou DME, éther éthylique, THF et acétonitrile) étaient achetés dans des bouteilles étanches et utilisés tels quels sans autre purification. Les silanols $Ph_3SiOH$, $Et_3SiOH$, $Ph_2Si(OH)_2$ étaient utilisés tels que fournis, sans autre purification. L'isopropoxyde (isopropylate) cérique, le triméthylsilanol et le tétraméthyldisiloxanediol étaient préparés selon les techniques publiées.

Les spectres de RMN de H et de C étaient enregistrés sur un spectrophotomètre de RMN JEOL FX 90 Q FT. Les solutions des échantillons étaient préparées dans la boîte à gants. Les solvants deutériés $CHCl_3$-d, $C_6H_6$-$d_6$ et THF-$d_8$ étaient achetés.

Exemple 1

Préparation du tétra(triphénylsilyloxyde) de cérium (IV)

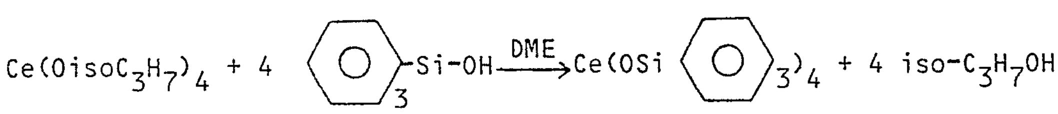


On dissout 5 g (0,0132 mol) d'isopropylate cérique dans 60 ml (≃52 g) de diméthoxyéthane (DME). On ajoute à la solution jaune limpide 14,6 g (0,0531 mol) de triphénylsilanol sous forme solide. Le $Ph_3SiOH$ passe immédiatement en solution. Après 45 min, il s'est formé un précipité blanc et on ajoute 50 ml d'éther et on

continue à agiter pendant les 3 h suivantes. On filtre ensuite le précipité en utilisant un verre fritté de Schlenk et on lave avec 3 portions de chacune 10 ml d'éther éthylique. On sèche le produit sous 1 mmHg à la température ambiante pour donner 9,8 g (60%) d'une poudre blanche fine, assez stable à l'air. F > 250°C (déc.).

Solubilité : soluble dans $C_6H_6$, $CHCl_3$, l'acétone, l'acide acétique glacial, le THF ; légèrement soluble dans l'éther et le DME ; insoluble dans $H_2O$.

Spectres de RMN :

$^1H(C_6H_6\text{-}d_6)$, δ : 2,9 ; 3,0 ; et 6,9 ; 7,0 ; 7,1 ; 7,77 ; 7,86 ; 7,87 groupes phényles, multiplet.

$^1H(CHCl_3\text{-}d)$, δ : 3,0 ; 3,2 ; 6,9 ; 7,0 ; 7,1 ; 7,2 ; 7,5 ; 7,6.

$^{13}C(CHCl_3\text{-}d)$, δ : 60,24 ; 71,83 ; et 127,41 ; 128,83 ; 135,27 ; 138,47 groupes phényles.

$^{13}C(C_6H_6\text{-}d_6)$, δ : 59,8 ; 72,05 ; 126,9 ; 127,9 ; 129,3 ; 135,8 ; 139,0.

Analyses élémentaires calculé pour : $C_{72}H_{60}O_4Si_4Ce$ (1240,46) ; C69,65 (69,20) ; H 4,83 (4,73) ; Si 9,05 (9,15) ; Ce 11,29 (11,22) ; valeurs entre parenthèses : valeurs trouvées.

## Exemple 2

### Préparation du tétra(triphénylsilyloxyde) de cérium (IV)

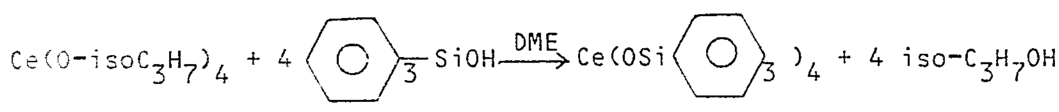


On dissout 16 g (0,042 mol) d'isopropylate cérique dans 50 ml (≃43 g) de DME. On ajoute lentement au moyen d'une seringue à la solution agitée une solution incolore limpide de 46,97 g (0,16 mol) de triphénylsilanol dans 50 ml (43 g) de DME. Après 10 s, il s'est formé un précipité blanc et on continue à agiter pendant les 15 min suivantes. On filtre ensuite le précipité en utilisant un verre fritté de Schlenk et on lave avec 2 portions de chacune 50 ml d'éther éthylique. On sèche le produit à la température ambiante pour donner 50 g (96%) d'une poudre blanche fine (les propriétés telles que solubilité, point de fusion et stabilité à l'air sont identiques à celles du produit décrit à l'exemple 1).

Spectres de RMN :

$^1H(CHCl_3\text{-}d)$, δ : 3,07 ; 3,29 ; 6,87 ; 6,95 ; 7,03 ; 7,11 ; 7,19 ; 7,52 ; 7,60

$^{28}Si(C_6H_6\text{-}d_6/THF/TMS)$, δ : 24,14

## Exemple 3

### Préparation du tétra(triphénylsilyloxyde) de cérium (IV)

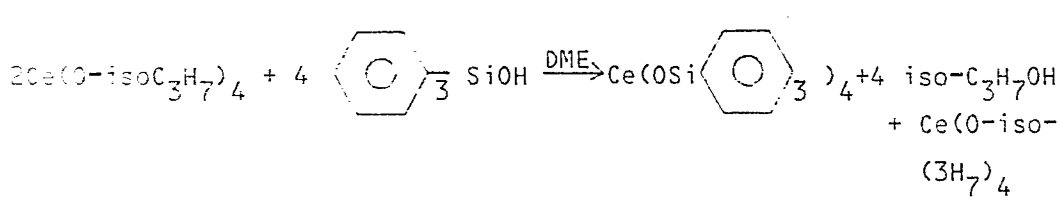


On dissout 3,84 g (0,01019 mol) d'isopropylate cérique dans 20 ml (17 g) de DME. On ajoute à la solution limpide 6 g (0,0217 mol) de triphénylsilanol. Le triphénylsilanol passe immédiatement en solution. Il ne s'est pas formé de précipité après agitation pendant 3 h. On continue à agiter pendant une nuit, après quoi il se forme un précipité blanc. On filtre le produit sur un verre fritté de Schlenk, on lave un petit nombre de fois à l'éther éthylique et on sèche à la température ambiante pour donner 2,5 g (31,6%) d'une poudre fine blanche.

Solubilité : soluble dans $C_6H_6$, $CHCl_3$, l'acétone, l'acide acétique glacial, le THF ; légèrement soluble dans l'éther et le DME ; insoluble dans $H_2O$.

Spectres de RMN :

$^1H(C_6H_6\text{-}d_6)$, δ : 2,9 ; 3,0 ; et 6,9 ; 7,0 ; 7,1 ; 7,77 ; 7,86 ; 7,87 groupes phényles, multiplet.

$^1H(CHCl_3\text{-}d)$, δ : 3,0 ; 3,2 ; 6,9 ; 7,0 ; 7,1 ; 7,2 ; 7,5 ; 7,6.

$^{13}C(CHCL_3\text{-}d)$, δ : 60,24 ; 71,83 ; et 127,41 ; 128,83 ; 135,27 ; 138,47 groupes phényles.

$^{13}C(C_6H_6\text{-}d_6)$, δ : 59,8 ; 72,05 ; 126,9 ; 127,9 ; 129,3 ; 135,8 ; 139,0.

## Exemple 4

### Préparation du tétra(triéthylsilyloxyde) de cérium (IV)

$$Ce(O\text{-}isoC_3H_7)_4\ 1{,}8\ isoC_3H_7OH + 4\ (C_2H_5)_3SiOH \xrightarrow[CH_3CN]{\text{éther}} Ce(OSi(C_2H_5)_3)_4 + 5{,}8\ isoC_3H_7OH$$

On met en suspension 5,8 g (≃0,0175 mol) d'isopropylate cérique dans 40 ml (31 g) d'acétonitrile ($CH_3CN$) et on ajoute 20 ml (14 g) d'éther éthylique à la suspension. Il se forme un mélange jaune clair qui contient un peu de $Ce(OC_3H_7)_4$, on ajoute 10 g (0,0757 mol) de triéthylsilanol au moyen d'une seringue. Après agitation pendant 15 min, il s'est formé deux couches (une couche jaune verdâtre et une couche brune) et on n'observe pas de $Ce(OisoC_3H_7)_4$ non dissous. On transvase la couche jaune verdâtre au moyen d'une seringue dans une fiole de Schlenk où l'on évapore la solution à siccité. Il reste une masse jaune brillante collante. L'addition de 30 ml (23 g) de $CH_3CN$ provoque la formation d'une suspension blanche laiteuse. Après agitation pendant 5 min, on sépare le $CH_3CN$ pour donner une poudre "humide" jaune clair. Rendement : 10 g (≃86%).

Propriétés : poudre jaune clair, très hygroscopique, légèrement collante. Soluble dans la plupart des solvants organiques ($C_6H_6$, toluène, $CHCl_3$, THF, DME, éther, etc ). Insoluble dans $CH_3CN$, F≃100°C.

Spectres de RMN :

$^1H(CHCl_3\text{-}d)$, δ : 0,48 ; 0,57 ; 0,65 (t,3) ; 0,90 ; 0,98 ; 1,07 ; 1,09 (9,2).

$^{13}C(CHCl_3\text{-}d)$, δ : 7,39 ; 7,52.

Analyses élémentaires :

calculé pour $C_{24}H_{60}O_4Si_4Ce$ (664,46)

C 43,34 (43,47) ; H 9,03 (9,43) ; Si 16,90 (16,75) ; Ce 21,09 (21,10) valeurs entre parenthèses : valeurs trouvées.

Les spectres de RMN et les analyses élémentaires confirment la formule $Ce(OSiEt_3)_4$

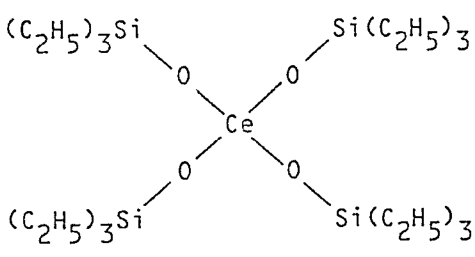

## Exemple 5

Préparation du tétra(triéthylsilyloxyde de cérium (IV)

$$Ce(O\text{-}isoC_3H_7)_4 + 4(C_2H_5)_3SiOH \xrightarrow{DME} Ce(OSi(C_2H_5)_3)_4 + 4\ isoC_3H_7OH$$

On dissout 4 g (0,0106 mol) d'isopropylate de cérium dans 2 ml de DME. On ajoute au moyen d'une seringue à la solution jaune limpide agitée 6 g (7 ml) de $(C_2H_5)_3SiOH$ et on continue à agiter pendant 1 h. On sépare ensuite le solvant sous le vide d'une pompe à huile. On maintient l'huile jaune épaisse restante à 40°C pendant 2 h. Comme il ne s'est pas produit de transformation en une poudre, on ajoute 20 ml (15 g) de $CH_3CN$ pour former un précipité jaune pale que l'on filtre en utilisant un verre fritté de Schlenk. On évapore ensuite à siccité le filtrat laiteux jaune clair sous le vide d'une pompe à huile pour donner 4 g (57%) d'une poudre humide jaune verdâtre.

Propriétés : poudre jaune clair, très hygroscopique, légèrement collante. Soluble dans la plupart des solvants organiques ($C_6H_6$, toluène, $CHCl_3$, THF, DME, éther, etc.). Insoluble dans $CH_3CN$. F ≈ 100°C.

Spectres de RMN :

$^1H(CHCl_3\text{-}d)$, δ : 0,48 ; 0,57 ; 0,65 (t,3) ; 0,90 ; 0,98 ; 1,07 ; 1,09 (9,2).

$^{13}C(CHCl_3\text{-}d)$, δ : 7,39 ; 7,52.

Analyses élémentaires :

calculé pour $C_{24}H_{60}O_4Si_4Ce$ (664,46)

C 43,34 (43,47) ; H 9,03 (9,43) ; Si 16,90 (16,75) ; Ce 21,09 (21,10) valeurs entre parenthèses : valeurs trouvées.

Les spectres de RMN et les analyses élémentaires confirment la formule $Ce(OSiEt_3)_4$

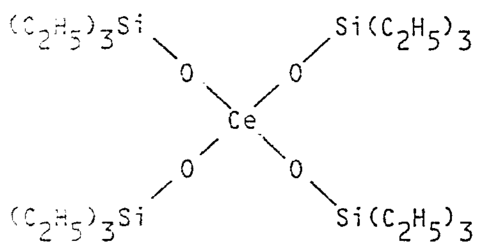

## Exemple 6

Préparation du bis(tétraméthyldisiloxanediolate) de cérium (IV)

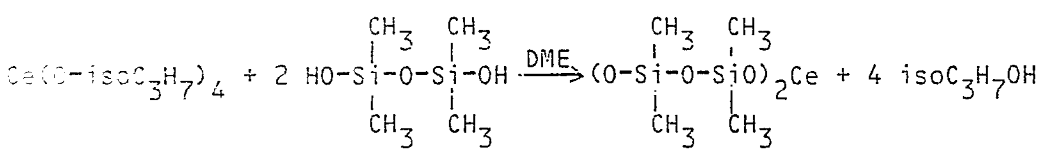


On dissout 3,05 g (0,00615 mol) de $Ce(OiPr)_4$, 1,8 iPrOH dans 45 ml de DME. On ajoute à la solution une solution de 2,05 g (0,0123 mol) de tétraméthyldisiloxanediol dans 20 ml de DME, ce qui provoque un changement immédiat de couleur du jaune orangé au jaune clair. Après agitation pendant 2 h, on évapore le solvant à siccité pour donner une masse jaune huileuse. Afin de la transformer en une poudre, on conserve la masse pendant plusieurs heures sous le vide de la pompe à huile (1 mmHg) et par traitement avec une spatule on obtient 2,8 g (97,2%) d'une poudre jaune comme produit brut.

On obtient une purification supplémentaire de la manière suivante :

On dissout le produit brut dans 20 ml de pentane et on ajoute 5 ml de $CH_3CN$ à la solution limpide. Il se forme

immédiatement une faible quantité de précipité et on conserve le mélange pendant une nuit à -30°C. Il se forme un précipité jaune pale. La filtration et le séchage sous le vide de la pompe à huile donnent 2 g (69%) d'une poudre jaune pâle.

Propriétés : poudre jaune pâle, sensible à l'air ; hydrophobe. Très soluble dans le DME, le pentane, le toluène ; moyennement soluble dans $CH_3CN$. Déc. ≃ 200°C

Spectres de RMN :

$^{1}H(C_6H_6\text{-}d_6)$, δ : 0,342

$^{13}C(C_6H_6\text{-}d_6)$, δ : 1,4014

Exemple 7

Préparation du diisopropoxy-1,1-diphénylsilanediolate de cérium (IV)

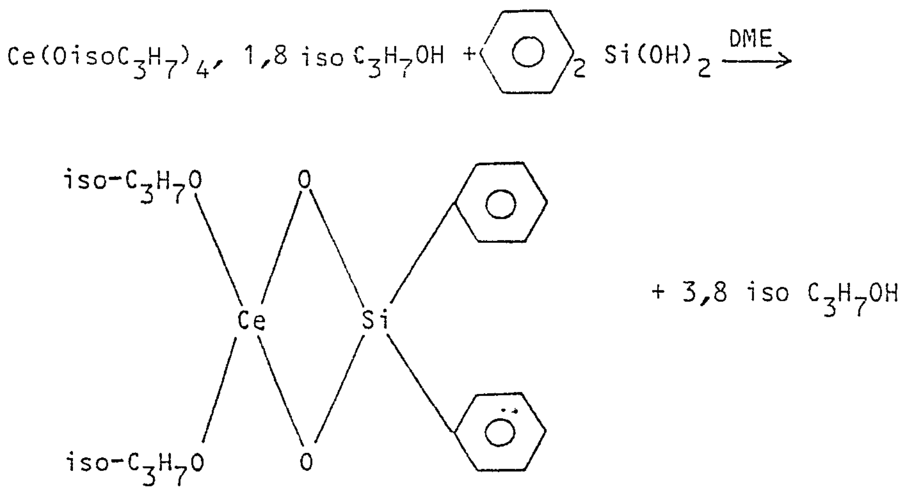


A une solution jaune limpide de 6 g (0,01238 mol) de $Ce(OSiOC_3H_7)_4$, 1,8 iso$C_3H_7OH$ dans 30 ml (26 g) de DME, on ajoute 2,67 g (0,01238 mol) de

diphénylsilanediol 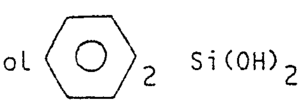

sous forme solide. Après agitation pendant quelques minutes, il s'est formé une suspension épaisse, en ajoutant ≃ 10 ml de DME, on obtient une solution limpide que l'on agite pendant 3 h. On sépare le solvant en chauffant doucement (≃ 40°C) sous le vide de la pompe à huile. Le solide mousse avant de sécher complètement mais peut être facilement transformé en une poudre en utilisant une spatule.

Rendement : 5 g (85,5%) d'une poudre jaune, légèrement sensible à l'air. Très soluble dans $CHCl_3$, l'éther, le DME ; soluble dans $C_6H_6$ ; insoluble dans $CH_3CN$. F 95-100°C.

Spectres de RMN :

$^{1}H(CHCl_3\text{-}d)$, δ : 1,26 ; 1,33 ; 5,1 ; 7,26 ; 7,72

$^{13}C(CHCl_3\text{-}d)$, δ : 27,75 ; 127,27 ; 128 ; 129 ; 134,85

Analyses élémentaires :

calculé pour $C_{18}H_{24}O_4SiCe$ 472,205 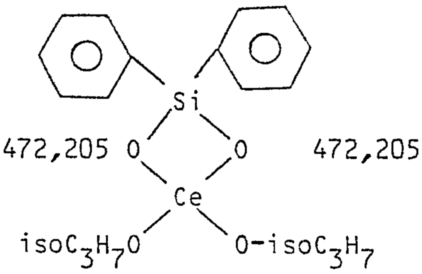 472,205

C 45,74 (39,20) ; H 5,08 (4,93) ; Si 5,94 (6,04) ; Ce 29,64 (30,60).

Le rendement de 85,5% est basé sur un poids moléculaire de 472,205.

## Exemple 8

### Préparation du bis(1,4-diphényl-silanediolate) de cérium (IV)

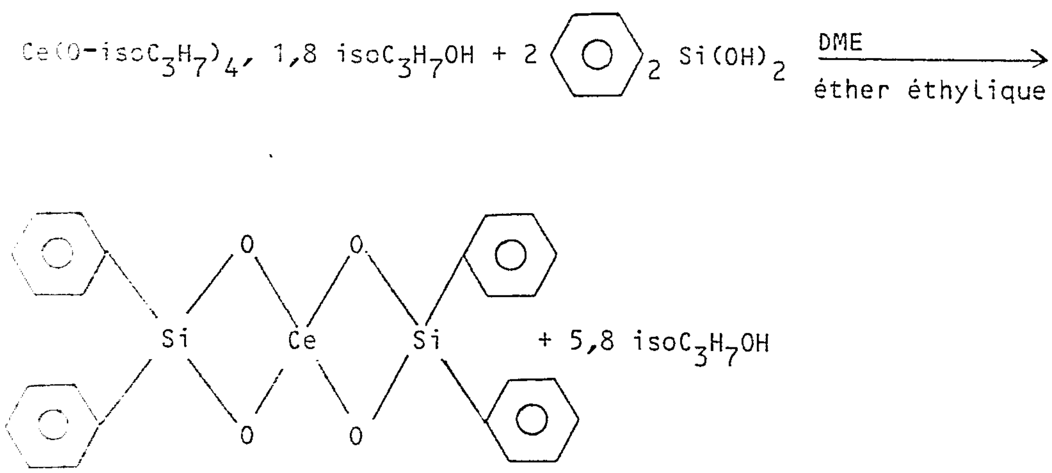


A une solution agitée de 12 g (0,02476 mol) de $Ce(OisoC_3H_7)_4$, 1,8 $isoC_3H_7OH$ dans 20 ml (14 g) d'éther éthylique, on ajoute une solution de 10,7 g (0,0495 mol) de diphénylsilanediol dans 40 ml (35 g) de DME. Il se forme immédiatement une suspension jaune clair épaisse qui rend l'agitation pratiquement impossible. On ajoute 20 ml (14 g) d'éther éthylique et on continue à agiter pendant l'heure suivante. Ensuite, on transvase le mélange de réaction sur un verre fritté de Schlenk et, après filtration soignée, on sèche le solide jaune sur le verre fritté pour donner 11,05 g de produit brut. On transvase ensuite le produit dans une fiole de Schlenk et on l'agite dans 48 ml (37 g) de $CH_3CN$ pendant 3 h. Après filtration, le séchage sous le vide de la pompe à huile donne 7,8 g (57,3%) d'une poudre jaune clair.

Propriétés : poudre jaune clair moyennement sensible à l'air, hydrophobe. Soluble dans le THF, $CHCl_3$, $C_6H_6$, moyennement soluble dans le DME, insoluble dans $CH_3CN$ et l'éther. F $\simeq$ 155°C (déc). Les solutions limpides très concentrées dans $C_6H_6$ ou $CHCl_3$ se prennent sous forme de verres.

Spectres de RMN :

$^1H(C_6H_6\text{-}d_6)$, $\delta$ : 3,1 ; 7,15 ; 7,85

$(CHCl_3\text{-}d_1)$, $\delta$ : 3,31 ; 7,18 ; 7,35 ; 7,55

$(THF\text{-}d_8)$, $\delta$ : 3,2 ; 3,4 ; 7,16 ; 7,6

$^{13}C(C_6H_6\text{-}d_6)$, $\delta$ : 126,94 ; 127,96 ; 129,10 ; 135,01

$(CHCl_3\text{-}d)$, $\delta$ : 127,37 ; 128,99 ; 134,46

Analyses élémentaires :

calculé pour : $C_{24}H_{20}O_4Si_2Ce$ (568,29)

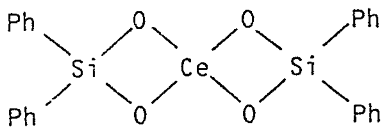

C 50,67 (43,63) ; H 3,52 (3,66) ; Si 9,88 (10,10) ; Ce 24,65 (25,42) valeurs entre parenthèses : valeurs trouvées.

## Exemple 9

### Réaction de $Ce(O\text{-}isoC_3H_7)_4$ avec $Ph_2Si(OH)_2$ (rapport 1 : 4)

A une solution agitée de 4 g (0,01062 mol) de $Ce(O\text{-}isoC_3H_7)_4$ dans 40 ml (35 g) de DME, on ajoute 9,1 g (0,0424 mol) de diphénylsilanediol sous forme solide. Le diol passe immédiatement en solution et l'agitation de la solution pendant la nuit ne provoque pas de formation d'un précipité. On sépare le solvant sous le vide de la pompe à huile. Avant séchage complet, il se forme une masse épaisse moussante, qui se transforme en une poudre après conservation sous le vide de la pompe à huile pendant 3 autres heures. Rendement 8 g (78,1%).

Propriétés : poudre fine jaune très clair. Moyennement sensible à l'air, hydrophobe. Bien soluble dans $C_6H_6$, $CHCl_3$, l'éther ; soluble dans $CH_3CN$, insoluble dans le pentane, F 75-80°C.

Spectres de RMN :

$^1H(CHCl_3\text{-d})$, δ : 3,08 ; 3,27 ; 7,14 ; 7,22 ; 7,33 ; 7,61

$^{13}C(CHCl_3\text{-d})$, δ : 127,58 ; 127,69 ; 130,07 ; 134,41

Analyses élémentaires :

calculé pour : $C_{48}H_{40}O_6Si_4Ce$ (964,46)

C 59,72 (56,86) ; H 4,15 (4,33) ; Si 11,64 (10,92) Ce 14,53 (13,66) ; valeurs entre parenthèses : valeurs trouvées

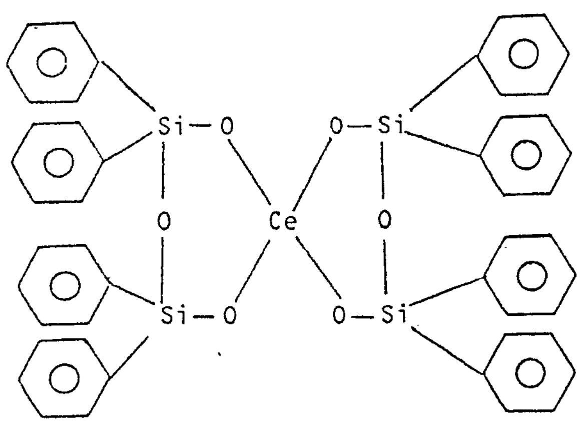

964,46

Structure possible ; le rendement est basé sur cette structure.

## Exemple 10

### Réaction de $Ce(O\text{-}isoC_3H_7)_4$ avec 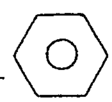 $_2$ $Si(OH)_2$ (rapport : 1 : 8)

A une solution agitée de 4 g (0,00825 mol) de $Ce(O\text{-}isoC_3H_7)_4$ dans 10 ml (8,6 g) de DME, on ajoute lentement goutte à goutte une solution de 15 g (0,0693 mol) de $Ph_2Si(OH)_2$ dans 40 ml (35 g) de DME (le volume total de $Ph_2Si(OH)_2$ + DME est de 50 ml). Après l'addition de 25 ml de la solution de diol, il se forme une suspension jaune clair qui cependant passe en solution lorsque l'on a ajouté 35 ml du diol. Après l'addition complète de la solution de diol, on n'observe pas de formation d'un précipité et on continue à agiter pendant 2 h. Ensuite, l'élimination du solvant sous le vide de la pompe à huile (1 mmHg) donne une huile jaune-gris. Comme on n'observe pas de transformation en poudre, on conserve l'huile sous vide poussé ($10^{-4}$ mmHg) pendant 4 h sans qu'elle donne une poudre. Cependant, après conservation du produit huileux pendant 2 jours à la température ambiante sous pression normale, il se transforme en un tourteau solide qui peut être pulvérisé par traitement à la spatule.

Propriétés poudre humide jaune-gris. Assez stable à l'air, bien soluble dans le toluène, le DME, l'acétone + $CHCl_3$, légèrement soluble dans $CH_3CN$ ; insoluble dans l'hexane, F 72-74°C.

Spectres de RMN :

$^1H(CHCl_3\text{-}d)$, $\delta$ : 3,15 ; 3,29 ; 7,21 ; 7,28 ; 7,43 ; 7,53 ;

$^{13}C(CHCl_3\text{-}d)$, $\delta$ : 127,60 ; 129,98 ; 134,32

Exemple 11

Réaction de $Ce(O\text{-}isoC_3H_7)_4$ avec 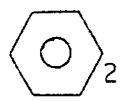 $Si(OH)_2$ (rapport 1 : 16)

A une solution agitée de 2 g (0,00412 mol) de $Ce(O\text{-}isoC_3H_7)_4$, 1,8 iPrOH dans 40 ml (35 g) de DME, on ajoute 15 g (0,0693 mol) de

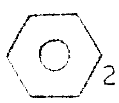 $Si(OH)_2$

sous forme solide. Après agitation pendant 1 h, il se forme une solution jaune clair presque limpide et on continue à agiter pendant 3 autres heures. La séparation du solvant sous le vide de la pompe à huile donne un produit huileux qui devient solide en une nuit à la température ambiante sous pression normale.

Propriétés : poudre blanc jaunâtre. Bien soluble dans le toluène, l'acétone, le $CHCl_3$ ; soluble dans le DME ; insoluble dans l'hexane. F 97-100°C.

Spectres de RMN :

$^1H(CHCl_3\text{-}d)$, $\delta$ : 3,15 ; 3,29 ; 7,21 ; 7,28 ; 7,43 ; 7,53 ;

$^{13}C(CHCl_3\text{-}d)$, $\delta$ : 127,60 ; 129,98 ; 134,32

Exemple 12

Réaction de $Ce(O\text{-}isoC_3H_7)_4$ avec 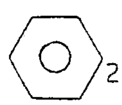 $Si(OH)_2$ (rapport 1 : 32)

A une solution agitée de 1 g (0,00206 mol) de $Ce(O\text{-}isoC_3H_7)_4$ dans 20 ml (17 g) de DME, on ajoute 15 g (0,0693 mol) de

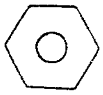 $_2$ $Si(OH)_2$

sous forme solide. Il se forme une suspension jaune clair qui ne se transforme pas en solution limpide après 45 min d'agitation. La séparation ultérieure du solvant en chauffant (≃ 50°C) conduit à la formation d'une huile épaisse jaune clair, preque limpide. En conservant l'huile pendant une nuit à la température ambiante et sous pression normale, elle se transforme en solide, on pulvérise à la spatule et on sèche à nouveau sous le vide de la pompe à huile.

Propriétés : poudre blanche, presque stable à l'air. Bien soluble dans le DME, l'acétone, $CH_3CN$, $CHCl_3$ ; soluble dans le toluène, insoluble dans l'hexane. F 104-106°C.

Spectres de RMN :

$^1H(CHCl_3\text{-d})$, δ : 3,15 ; 3,29 ; 7,21 ; 7,28 ; 7,43 ; 7,53 ;

$^{13}C(CHCl_3\text{-d})$, δ : 127,60 ; 129,98 ; 134,32

## Exemple 13

### Préparation du tétra(triméthylsilyloxyde) de cérium (IV)

$$Ce(O\text{-}isoC_3H_7)_4,\ 1{,}8\ isoC_3H_7OH + 4(CH_3)_3SiOH \xrightarrow{DME} Ce(OSi(CH_3)_3)_4,\ 1{,}8\ iPrOH + 4\ iPrOH$$

On dissout 10,2 g (0,021 mol) d'isopropylate cérique dans 20 ml (17 g) de DME. On ajoute par une seringue à la solution une solution de 9,3 ml (27,58 g ≃ 0,084 mol) de triméthylsilanol. Toutes les 3 min, un précipité fin commence à se former et on considère la réaction comme terminée après 1 h. On isole ensuite le précipité en utilisant un verre fritté de Schlenk et on sèche le produit jaune sur le verre fritté sous le vide de la pompe à huile. Rendement : 2,7 g (26% par rapport à $Ce(OSiMe_3)_4$).

Dans un traitement ultérieur, on évapore à siccité le filtrat brun-rouge foncé et on récupère 5,0 g d'un produit brut.

Spectres de RMN :

$^1H(CHCl_3\text{-d})$, δ : 0,1362 ; 1,35 ; 1,42 ; 4,81.

$^{13}C(CHCl_3\text{-d})$, δ : 3,38 ; 25,91 ; 70,82.

## Exemple 14

### Préparation du bis(isopropylate)-bis (triméthylsilyloxyde) de cérium (IV)

$$Ce(O\text{-}isoC_3H_7)_4,\ 1{,}8\ isoC_3H_7OH + 2(CH_3)_3SiOH \rightarrow (isoCH_3H_7O)_2Ce(OSi(CH_3)_3)_2\downarrow + 3{,}8\ isoC_3H_7OH$$

On dissout 10,2 g (0,021 mol) d'isopropylate cérique dans 20 ml (17 g) de DME. On ajoute avec une seringue à la solution agitée 4,65 ml (≃3,79 g≃0,042 mol) de triméthylsilanol. Toutes les 30 min, la solution rouge devient trouble et il commence à se former progressivement un précipité fin. On laisse réagir le mélange pendant les 4 h suivantes. Ensuite, la filtration sur un verre fritté de Schlenk et le séchage sous le vide de la pompe à huile donnent 3,1 g (33,8%) d'une poudre jaune pâle.

Spectres de RMN :

$^1H(C_6H_6\text{-d}_6)$, δ : 0,3356 ; 1,34 ; 1,41 ; 4,30

$^{13}C(C_6H_6\text{-d}_6)$, δ : 3,73 ; 26,37 ; 71,98.

## Exemple 15

### Préparation du tétraméthyldisiloxanediolate-diisopropylate de cérium (IV)

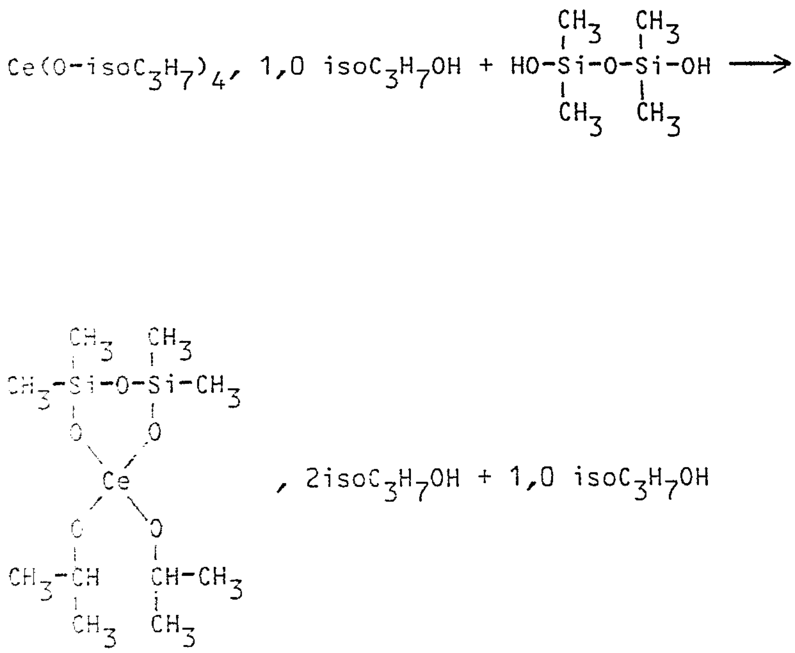


On dissout 13,74 g (0,0314 mol) d'isopropylate cérique et 5,25 g (0,0314 mol) de tétraméthyldisiloxanediol, chaque fois dans 10 ml de DME. En ajoutant le composé de Si à la solution de complexe de Ce, il se forme immédiatement un précipité jaune qui passe partiellement en solution. Cependant, il est possible de récupérer environ 100 mg de précipité jaune par filtration rapide et séchage sous vide.

Spectres de RMN :

$^{1}H(CHCl_3\text{-}d)$, $\delta$ : 0,0197 ; 1,26 ; 4,71

$^{13}C(CHCl_3\text{-}d)$, $\delta$ : 0,9941 , 27,05 ; 71,80

Après la filtration, on obtient un filtrat rouge clair qui donne une huile épaisse par élimination de solvant. Il n'est pas possible de la transformer en poudre par un nouveau séchage. Ses spectres de RMN sont presque identiques à ceux du précipité jaune cité ci-dessus.

Les hydrocarbylsilyloxydes de cérium peuvent être utilisés dans la fabrication de poudres d'oxydes contenant du cérium et du silicium, utiles dans la préparation de céramiques à hautes performances, de gels durs et de films contenant du cérium et du silicium ; de fibres optiques contenant des polymères ou oxydes de cérium et silicium ; d'additifs pour biocides, d'additifs pour revêtements de silicones comme les peintures, pour le traitement de textiles et autres matières cellulosiques. Ils peuvent aussi être utilisés dans diverses applications catalytiques, comme par exemple la vulcanisation du caoutchouc de silicone et la catalyse dans la fabrication de produits de polyuréthannes. Le tableau illustre les potentiels des nouveaux composés dans un essai standard démontrant et comparant l'activité catalytique :

| Composé essayé | Concentration ppm | Temps de solidification min |
|---|---|---|
| Acétylacétonate de nickel (témoin) | 314 | 115 |
| $Ce(O_2SiPh_2)_2$ | 260 | 105 |
| $(PrO)_2Ce(O_2SiPh_2)$ | 320 | 105 |
| $(PrO)_2Ce(OSiMe_3)_2$ | 372 | 45 |
| $Ce(OsiEt_3)_4$ | 233 | 80 |
| $Ce(OSiMe_3)_4$ | 282 | 69 |

Les réactions sont effectuées avec le polyoxypropylènetriol (NiAX Triol LG-56 de la Société Union Carbide) et le toluène diisocyanate dans un mode opératoire décrit dans Journal of Applied Polymer Science, vol IV, n° 1, p 207-211 (1960).

Certains des nouveaux produits sont étonnamment résistants à l'hydrolyse, tandis que d'autres s'hydrolysent très lentement. Il est donc possible de former un silyloxyde ayant, selon l'application, n'importe quelle vitesse d'hydrolyse souhaitée.

En outre, la présence simultanée de silicium et de cérium dans la même molécule est avantageuse lorsque les deux sont nécessaires, par rapport à l'addition d'alcoolates de cérium et de silicium séparés.

**Revendications**

1. Procédé pour la fabrication d'hydrocarbylsilyloxydes cériques, caractérisé en ce qu'il consiste à transéthérifier un alcoolate cérique par un hydrocarbylsilanol en conditions anhydres à une température dans la gamme d'environ -30 à environ 200° C, en déplaçant ainsi au moins un groupe hydrocarbyloxy de l'alcoolate cérique sous forme de l'alcool correspondant, par un groupe silyloxyde et formant ainsi l'hydrocarbylsilyloxyde cérique.

2. Procédé selon la revendication 1, caractérisé en ce que l'alcoolate cérique est un alcoolate dérivant d'un alcool aliphatique ayant de 1 à environ 20 atomes de carbone ou d'un alcool cycloaliphatique ayant de 3 à environ 20 atomes de carbone.

3. Procédé selon l'une des revendications 1 et 2, caractérisé en ce que l'alcoolate cérique est un alcoolate dérivant d'un alcool aliphatique ayant de 1 à 5 atomes de carbone.

4. Procédé selon la revendication 1, caractérisé en ce que l'hydrocarbylsilanol est un silanol aliphatique inférieur ayant de 1 à 5 atomes de carbone.

5. Procédé selon la revendication 1, caractérisé en ce que l'hydrocarbylsilanol est un silanol aliphatique supérieur, cycloaliphatique, aromatique ou alkylaromatique ayant au moins 6 jusqu'à environ 20 atomes de carbone.

6. Procédé selon la revendication 1, caractérisé en ce que l'hydrocarbylsilanol est un silanol cycloaliphatique ayant de 3 à environ 20 atomes de carbone.

7. Procédé selon la revendication 1, caractérisé en ce que l'hydrocarbylsilanol est un silanol aromatique ou alkylaromatique ayant de 6 à environ 20 atomes de carbone.

8. Procédé selon la revendication 1, caractérisé en ce que l'hydrocarbylsilanol répond à la formule (II)

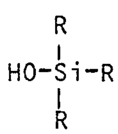

(II)

dans laquelle R est un groupe hydrocarboné ayant de 1 à environ 10 atomes de carbone.

9. Procédé selon la revendication 1, caractérisé en ce que l'hydrocarbysilanol répond à la formule (III)

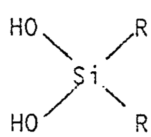

(III)

dans laquelle R est un groupe hydrocarboné ayant de 1 à environ atomes de carbone.

10. Procédé selon la revendication 1, caractérisé en ce que le l'hydrocarbylsilanol répond à la formule (IV)

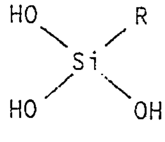

(IV)

dans laquelle R est un groupe hydrocarboné ayant de 1 à environ 10 atomes de carbone

11. Procédé selon la revendication 1, caractérisé en ce que le silanol répond à la formule (V)

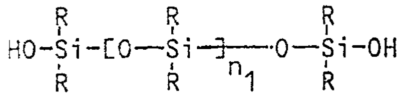

(V)

dans laquelle

R est un groupe hydrocarboné ayant de 1 à environ 10 atomes de carbone, et

$n_1$ est le nombre de ces motifs dans le polymère et est compris entre 1 et environ 1 000.

12. Procédé selon la revendication 11, caractérisé en ce que l'hydrocarbylsilanol est une résine silicone solide contenant des groupes OH libres.

13. Procédé selon la revendication 1, caractérisé en ce que la transéthérification est mise en oeuvre en solution dans un solvant inerte dans lequel l'hydrocarbylsilyloxyde cérique est insoluble.

14. Procédé selon la revendication 1, caractérisé en ce que la transéthérification est mise en oeuvre en solution dans un solvant inerte dans lequel l'hydrocarbylsilyloxyde cérique est soluble.

15. Procédé selon la revendication 14, caractérisé en ce que le solvant est l'alcool dont est formé l'alcoolate cérique.

16. Procédé selon la revendication 15, caractérisé en ce que l'on sépare par distillation l'alcool libre formé au cours de la transéthérification

17. Procédé selon la revendication 1, caractérisé en ce qu'il est mis en oeuvre à une température de réaction dans la gamme de 20 jusqu'à environ 40° C.